Europäisches Patentamt

European Patent Office

Office européen des brevets

(19)

(11) Publication number: **0 171 348**

**A1**

(12) **EUROPEAN PATENT APPLICATION**

(21) Application number: 85630123.9

(51) Int. Cl.⁴: **F 16 B 21/16**

(22) Date of filing: **01.08.85**

(30) Priority: **09.08.84 US 638928**

(43) Date of publication of application: **12.02.86**
Bulletin 86/7

(84) Designated Contracting States: **BE DE FR GB IT LU NL**

(71) Applicant: **REXNORD INC., 350 N. Sunny Slope,
Brookfield, WI 53005 (US)**

(72) Inventor: **Reece, Marvin P., 33262 Bremerton, Dana Point
California 92629 (US)**
Inventor: **Harbin, Thomas E., 5751 Meinhardt Road,
Westminster California 92683 (US)**

(74) Representative: **Weydert, Robert et al, Office
Dennemeyer S.à.r.l. 21-25 Aliée Scheffer P.O. Box 41,
L-2010 Luxembourg (LU)**

(54) **Fastener for thin material and method for installing same.**

(57)  A fastener for material which is less than one millimeter in thickness and a method for installing the fastener in the material so as to preclude rotational and axial movement of the fastener are provided. The fastener (14) has a serrated portion (17) which, prior to and following installation, lies substantially in the same plane as an opening (13) in the sheet of thin material in which the fastener is inserted for securement. The originally flat area (12) surrounding the opening (13) is deformed prior to installing the fastener. The fastener becomes immovable relative to the sheet when the deformed area (12) surrounding the opening (13) is returned by force to its original flat state so that it surrounds and con-tacts the serrated portion (17) of the fastener.

The present invention relates to fasteners adapted for securement in thin sheets of metal or other type of malleable material, and a method for installing the fastener therein.

Fasteners commonly described as press bolts or press nuts are well-known in the prior art. Various designs and methods for installing such fasteners in relatively thin material, e.g., sheet metal at least a millimeter in thickness, are available to the industry. However, with the ever increasing use of sheet material having a thickness of less than one millimeter, there is the increasing and, as yet, unanswered need for fasteners which can be securely installed and reliably retained in such thin material. The prior art lacks such technology, and it is this need which the present invention addresses.

The present invention is a fastener and method for installing same in a thin sheet of material, i.e., material less than one millimeter in thickness. The fastener, whether a nut or a bolt, is provided a serrated portion located between the two ends of the fastener, e.g., between a bolt head and a threaded shank. This serrated portion is dimensioned to fit within a specially prepared opening in the material into which the fastener is to be installed. The area of the material containing the opening is prepared by deforming material immediately surrounding the opening into a dome-like configuration having a trapezoidal shape in cross-section. The opening is located at the crest or uppermost area of the configuration.

To install the fastener, it is positioned in the material opening with the serrated portion situated in subtantially the same plane as the opening. A force is then applied to the fastener and the sheet of material which is sufficient to flatten the raised area of the material. Such applied force causes the opening diameter to be reduced. The material defining the opening thus closes in upon the serrated portion and effectively locks the fastener within the material as a result of the material and the fastener serrated portion contacting each other. The installed fastener is thereby prevented from moving axially or rotationally relative to the

thin material.                                            0171348

This new design for a fastener and the method for installing it in a sheet of material less than a millimeter in thickness is clearly a technological advance in the state of the art for fastener technology.

A more thorough understanding of the present invention will be gained by reading the following description of the preferred embodiments with reference to the accompanying drawings in which:

Figure 1 is a top plan view of a raised area of thin sheet material.

Figure 2 is a view in cross-section of the raised area as seen generally along lines 2-2 in Fig. 1.

Figure 3 is a view in elevation of a fastener of the present invention.

Figure 4 is a view in cross-section as seen generally along the lines 4-4 in Fig. 3.

Figure 5 is a view in cross-section of a portion of a second fastener of the present invention.

Figure 6 is a side-elevational view, shown partially in cross-section, of a fastener of the present invention as positioned prior to installation in a thin material.

Figure 7 is a side-elevational view, shown partially in cross-section, of a fastener installed in a thin material in accordance with the present invention.

In the drawings, like reference numerals and letters are used throughout the several views to identify the same or like elements of the invention. The present invention includes both a fastener and a method of installing the fastener securely in a thin sheet of material. To appreciate the invention, the environment in which it is applied will first be explained.

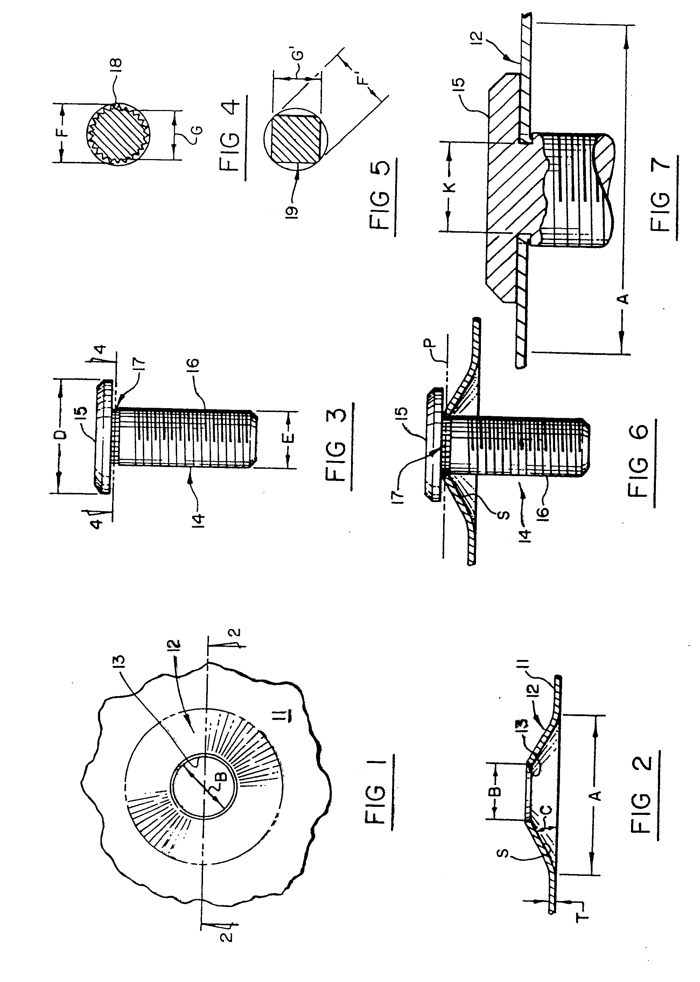

Referring now to Figs. 1 and 2, a portion of a larger sheet 11 of thin material, e.g., sheet metal or other type of malleable material, is shown. The present invention is directed

0171348

specifically for use in materials having a thickness of less than one millimeter and, often, a thickness of less than one-half millimeter. The material is prepared for the invention by punching or otherwise cutting an opening 13 in the material. The opening 13 has a pre-determined diameter B. The opening 13 is centrally located within an area 12 having a diameter A. This area 12 of the sheet of material is then deformed in any suitable manner into a dome-shaped configuration which has a generally trapezoidal cross-section as shown in Fig. 2. The centrally located opening 13 is thus situated at the crest or uppermost portion of the raised area 12. In the preferred embodiment of the invention, it has been determined that an angle C of approximately thirty degrees is suitable. This angle C is defined by an imaginery horizontal plane passing through the surrounding flat portion of the sheet material and a side of the dome-shaped or raised area 12. In Fig. 2 it can be seen that deforming the area 12 will cause the opening 13 to flare outward slightly at its upper most edge.

The fastener of the present invention may be constructed as either a nut or a bolt. In the drawings of the preferred embodiment a press bolt is illustrated. However, it will be appreciated by those skilled in the art that either a press bolt or a press nut may embody the present invention. Whether a press bolt or a press nut is used is a matter of choice so long as the type of fastener chosen conforms to the particular parameters of the present invention which will now be described.

Referring to Figs. 3-5, a press bolt fastener 14 is shown. The fastener is constructed of a material which is harder than the sheet material 11 into which the fastener is to be installed. Each fastener has an upper portion 15, e.g., a bolt head, of diameter D, and a lower portion 16, e.g., a threaded bolt shank, with an outside diameter E. Located intermediate and connecting the upper and lower fastener portions 15, 16 is a serrated portion 17. The serrated portion 17 may be formed or machined in several embodiments, two of which are shown in Figs. 4 and 5. In Fig. 4 the serrated portion 17 is designed to have a multiplicity of knurls, notches or teethlike projections 18. In this embodiment there is an outside or major diameter F and a root or minor diameter G. An alternate embodiment for the serrated portion 17 is shown in Fig. 5. In this embodiment a plurality of grooves 19 define the serrated portion of the fastener. Depending on the chosen number of grooves 19, the cross-section of the serrated portion may appear as a square, a pentagon, an octagon, etc. Regardless of the number of grooves chosen, there. is a distance F' measured from one corner of one of the grooves 19 in the serrated portion to an opposite corner of a groove opposite thereof. This distance F' is comparable to the diameter F of the preferred embodiment shown in Fig. 4. Further, in this embodiment, the distance symbolized by the letter G' is likewise comparable to the minor diameter G of the preferred embodiment shown in Fig. 4. Regardless of the embodiment chosen for the serrated portion, the design parameters are as follows: The diameter E of the lower portion of the fastener must be less than the diameter B of the opening 13. The diameter D of the fastener upper portion 15 must be greater than the opening diameter B. The diameter F or distance F' of the serrated portion 17 of the fastener is substantially equal to or slightly less than the diameter B of opening 13.

With reference now to Figs. 2, 6 and 7, the fastener 14 is installed in the thin material 11 in the following manner. The fastener lower portion 16 is inserted through the opening 13 in the raised area 12. The fastener upper portion will thus extend above and rest upon the uppermost edge of the opening 13 and raised area 12. The fastener lower portion extends freely therebelow. In the arrangement the fastener serrated portion and the opening 13 are located in substantially the same plane. This imaginery plane P is represented by a broken line in Fig. 6.

After the fastener is positioned as shown in Fig. 6, a sufficient force is applied to the fastener head portion 15, and thus to the raised area of material immediately surrounding the serrated portion 17 of the bolt, causing the raised area 12 to be flattened back into its original flat shape. As this flattening process takes place, the softer sheet material "moves" in response to the exerted force. The material immediately

0171348

surrounding the opening 13 flows in a direction away from the applied force, namely, radially inward or towards the center of the opening 13. As a result of the movement of the material, the diameter B of the opening 13 is reduced. The difference between the opening diameter B and the relevant diameter or measurement of the serrated portion 17 is not substantial. The sheet material being softer than the material of the fastener, fills the open areas between the opening 13 and the fastener serrated portion 17, with the shape of the serrated portion remaining unaltered. As the sheet material contacts the serrated portion, it exerts a compressive force upon the enclosed serrated portion 17, which becomes a permanent force at the completion of the flattening process. When installation is completed, as illustrated in Fig. 7, the opening 13 is reduced to a size symbolized by the dimension K which is less than the first diameter B for the opening 13. As can be appreciated from Fig. 7, the final dimension K for the opening 13 is effectively equal to the relevant diameter or dimension for the serrated portion of the fastener. In the illustrated preferred embodiment, the dimension K may be referred to as the minor diameter of the opening E. Thus the fastener is locked in a sheet of thin material without requiring any other portion of the fastener to be embedded in the sheet material, other than the specially designed serrated portion 17. This locking arrangement which occurs between the thin material immediately surrounding the opening 13 and the serrated portion 17 which contacts the thin material, effectively prevents the fastener from moving axially or rotationally relative to the thin material.

CLAIMS

0171348

1.      A method for securing a fastener in a substantially flat sheet of material having a thickness of less than one millimeter and a hardness less than that of the fastener, the method including the steps of:

(a)   forming a raised area in the sheet of material with an opening of a predetermined diameter being centrally located in the raised area;

(b)   positioning in the raised area of the sheet of material, a fastener having a lower portion constructed and arranged to pass freely through the opening and extending below the sheet of material, an upper portion having a size greater than the diameter of the opening and extending above the sheet of material, and a serrated portion, intermediate and connecting the upper portion and the lower portion, constructed and arranged to lie substantially in the same plane as the opening; and

(c)   securing the fastener in the sheet of material and decreasing the diameter of the opening by flattening the raised area of the sheet of material and causing the sheet of material immediately adjacent the opening to close in around the serrated portion of the fastener, thereby securing the fastener in the sheet of material and preventing axial and rotational movement of the secured fastener relative to the sheet of material.

2.      A fastener adapted for securement in a sheet of material, the material having a thickness of less than one millimeter and a raised area with a centrally located opening therein, said fastener comprising:

a lower, threaded portion having an outer diameter equal to or less than the diameter of the opening such that said threaded portion may pass through the opening in the sheet of material;

an upper portion constructed and arranged so as to be of a size greater than the opening in the sheet of material; and

a serrated portion, connecting said lower portion and said upper portion, constructed and arranged to lie substantially in the same plane as the opening when said lower portion is inserted through the opening,

whereby when said serrated portion is lying

0171348

substantially in the same plane as the opening and the raised area is flattened, the size of the opening is decreased and the material immediately surrounding the opening moves toward and closes about said serrated portion, thereby securing the fastener in the sheet of material.

3.      The fastener according to claim 2 wherein said serrated portion has a major diameter equal to or less than the diameter of the opening and a minor diameter less than said outside diameter.

FIG 1

FIG 2

FIG 3

FIG 4

FIG 5

FIG 6

FIG 7

1/1

# EUROPEAN SEARCH REPORT

European Patent Office

Application number

| | DOCUMENTS CONSIDERED TO BE RELEVANT | | EP 85630123.9 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | <u>DE - B - 1 400 768</u> (HUGO BENZING OHG) <br> * Fig.; claim * <br> -- | 1 | F 16 B 21/16 |
| A | <u>DE - B - 1 475 280</u> (HUGO BENZING OHG) <br> * Fig. 3; claim 1; column 4, lines 55-68; column 5, lines 1-5 * <br> -- | 1 | |
| A | <u>DE - B - 2 204 831</u> (A. EHRENREICH & CIE) <br> * Claim * <br> -- | 1 | |
| A | <u>DE - B2 - 2 631 071</u> (GLAENZER SPICER S.A.) <br> * Fig. 2; claim 1 * <br> ---- | 1 | |
| | | | **TECHNICAL FIELDS SEARCHED (Int. Cl.4)** <br><br> F 16 B |

The present search report has been drawn up for all claims

| Place of search | Date of completion of the search | Examiner |
|---|---|---|
| VIENNA | 23-10-1985 | HEIN |